# EUROPEAN PATENT APPLICATION

(11) **EP 1 220 147 A1**
(43) Date of publication of application: **03.07.2002**
(21) Application number: 01203436.9
(22) Date of filing: 11.09.2001
(51) Int. Cl.: G06K 17/00

(54) **Method for preparing for transportation of a credit card or similar object**

(30) Priority: 11.09.2000 NL 1016144
(71) Applicant: PPC Card Systems B.V., 9704 AA Groningen (NL)
(72) Inventor: Sikkema, Ronald Oscar, 9461 AM Gieten (NL)
(74) Representative: Jorritsma, Ruurd

(57) **Abstract**

Method for preparing for transportation of a credit card, access pass, key unit or other object comprising a processor with memory which is loaded with general software/data and personal data relating to the person to which the object has to be transferred. The object has to be transferred in a package together with printed personal information destined to said person. In a first step the memory is loaded with said general software/data from a suited source. In a second step the memory is loaded with personal data from a suited file. In a third step the printed information is produced on the basis of data from said file. In a fourth step the printed information is packaged together with said object.

## Description

The invention relates to a method for preparing for transportation of a credit card, access pass, key unit or other object comprising a processor with memory which is loaded with general software/data and personal data relating to the person to which the object has to be transferred,
which object has to be transferred in a package together with printed personal information destined to said person,
whereby in a first step the memory is loaded with said general software/data from a suited source,
whereby in a second step the memory is loaded with personal data from a suited file,
whereby in a third step the printed information is produced on the basis of data from said file and whereby in a fourth step the printed information is packaged together with said object.

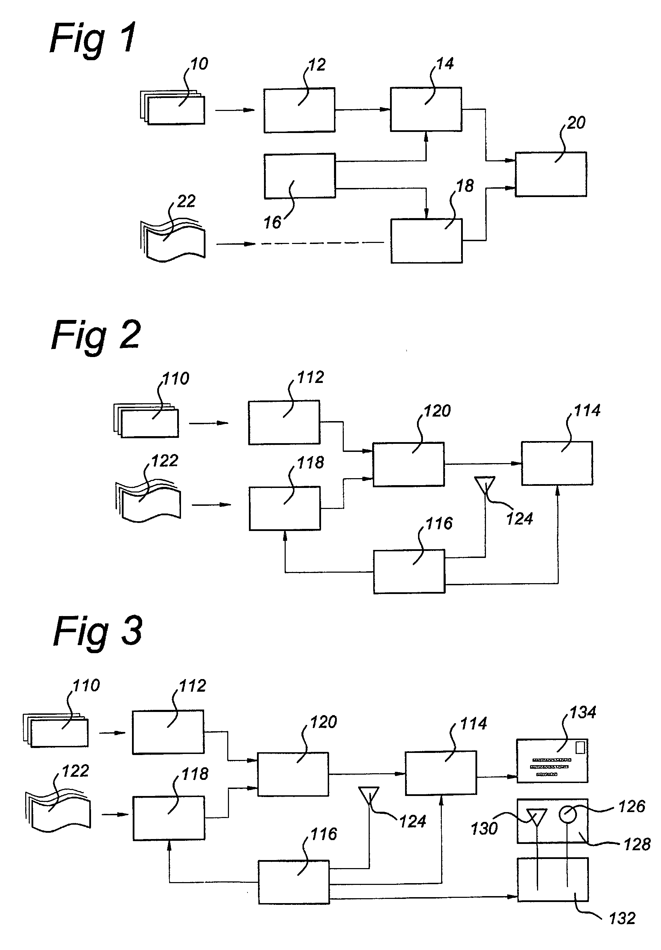

Such a method is generally known and will be explained in more detail with reference to the attached figure 1. In figure 1 schematically a system is shown in which the above-mentioned method is applied. The "empty" credit cards are indicated by 10. These credit cards are of the type in which a processor with memory is contained as well as means to communicate with said processor. As is common knowledge said means may for instance consist of an antenna etcetera, which is integrated, in the card. Also optical communication means can be applied. Apart from these wireless communication means it is possible to embody a number of contacts in the card which offer a communication path with the processor. This last possibility, however, is not of importance for the invention.

The cards are successively inserted in means 12, where the cards are loaded with software and data which is common for all cards. Thereafter the cards are transferred to means 14 in which the cards are personalised. That is done by means of a database which is loaded before with the necessary data and is stored in the memory 16. During this personalization process each credit card receives for instance a pin code or another type of personal code. If this personalization process is ready then the card will be transferred to the packaging means 20.

In parallel therewith the materials 22 to be printed are supplied to a printer or combination of printers where the materials to be printed will receive the correct personalised print on. The personal data are again received from the database 16 whereby in this case said data are for instance addresses which have to be printed onto a letter/envelope, a pincode which through the letter has to be transferred to the receiver of the credit card, etcetera. At the end of the printing process the printed materials are transferred to the packaging process 20 to be combined in there in a correct manner with the personalised card into a unit which is ready for transportation.

It may be clear that in this process synchronisation is of high importance. A situation wherein a credit card, personalised for a person A is combined with printed letters, envelopes etcetera destined for a person B has to be excluded of course.

In the prior art systems in many cases batch processing is used, which implies that for instance first all credit cards are loaded with general software/data. Thereafter all cards are personalised in a separate process and thereafter all personalised cards are combined with envelopes/letters into units which are ready for packaging. Especially in this last mentioned step one should take care that the right letters are combined with the right cards.

An object of the invention is now to indicate in which way these synchronisation problems can be prevented in a simple manner, whereby at least for the larger part use is made of the same apparatuses as in the already known systems.

Said object is fulfilled with a method of the type described in the first paragraph in that initially separately the first and third step are carried out,
that thereafter the fourth step is carried out whereby during said fourth step it is assured that at least part of the printed information is maintained visible,
that based on this visible information the corresponding personal data is selected from said file and the second step is carried out using means for wireless communication between the processor and the memory in said object.

To assure that at least part of the printed information maintains visible one could perform such that part of the printed information is present on the outside of the package.

To make use of already existing scanners etcetera it is preferred especially that said part of the printed information contains a barcode.

Many packages are at least partly or as a whole transparent, such as window envelopes or packages, which consist of a complete transparent plastic wrapper. If such a package is used, then one has to assure that the attachments, which together with the credit card etcetera are inserted in the package, are arranged in such a way that part of the printed information is maintained visible through the packaging material.

To exclude any possible error it is preferred to subject the ready product, i.e. the credit card or other object together with the printed personal information enclosed in the thereto related package to an end check. A preferred embodiment of the method has therefore the characteristic that in a succeeding checking step at least part of the printed information which is visible from the outside is scanned by a suitable scanner, that at least part of the personal data is read from the memory through a suitable wireless function reading unit and that both kinds of data are compared in comparison means with the information stored in said file.

The invention will be explained in more detail with reference to the attached drawing.

Figure 1 illustrates the already discussed system according to the state of the art.

Figure 2 illustrates a system, which functions in correspondence with the invention.

Figure 3 illustrates a further development of a system according to the invention whereby a final end check is possible.

The cards 110 are in this case in a processing unit 112 loaded with general software and data. The materials to be printed will receive the correct print-on in a printer unit (or a combination of printers) 118. The personal data are derived from a database 116. Thereafter the cards and the printed materials are supplied to a packaging process 120 in which the cards and the eventual letters are put in the envelope (or in another type of packaging) and the obtained product is closed for transportation. Care is taken thereby that part of the printed personal data or a thereto related code are visible on the outside of the package or are detectable for the correct sensors. On the outside of the package for instance a barcode could be printed in the printing process 118. At the end of the packaging process this barcode can be read for instance by a code reader 124. The read code is supplied as input data to the database 116 which retrieves thereafter the necessary personal data which are used in the means 114 to personalise the already packed card through a wireless communication path.

It will be clear that in this way no special measures are necessary to take care that an already personalised card is inserted in the corresponding personalised envelope together with the related personalised letter. On the contrary, the card which contains only the general software and data, is put into the now personalised envelope with the corresponding letter (if a letter is necessary), on the basis of the personalised data at the outside of the envelope the database is questioned and thereafter the packed credit card is personalised. In this manner it is assured that the personal data in the card at all times will correspond with the personal print-on on the package, the letter, the envelope, etcetera.

Figure 3 illustrates a further developed embodiment of the system according to the invention. In relation to figure 2 this system is expanded with a control station 126 comprising a detector 130 for reading for instance the barcode or the date which is visible on the outside of the packages 134 and a second detector 128 for making wireless contact with the processor in the chip card which is present in the package 134. The signals from the detector 130 and the detector 128 are supplied to a comparison unit 132, which receives also data from the memory 116. In the comparison unit 132 it is determined whether or not the data present on the outside as well as the data loaded into the chip correspond with the data, which are retrieved from the database 116. If that is so, then the ready product 134 is passed and is therewith ready for transportation. However, if in one way or another errors are developed then these errors will be detected by the comparison means 132 so that the respective product 134 can be taken off the production process.

## Claims

1. Method for preparing for transportation of a credit card, access pass, key unit or other object comprising a processor with memory which is loaded with general software/data and personal data relating to the person to which the object has to be transferred,
which object has to be transferred in a package together with printed personal information destined to said person,
whereby in a first step the memory is loaded with said general software/data from a suited source,
whereby in a second step the memory is loaded with personal data from a suited file,
whereby in a third step the printed information is produced on the basis of data from said file and whereby in a fourth step the printed information is packaged together with said object,
**characterized in that** initially separately the first and third step are carried out,
that thereafter the fourth step is carried out whereby during said fourth step it is assured that at least part of the printed information is maintained visible,
that based on this visible information the corresponding personal data is selected from said file and the second step is carried out using means for wireless communication between the processor and the memory in said object.

2. Method according to claim 1, **characterized in that** part of the printed information is present on the outside of the package.

3. Method according to claim 2, **characterized in that** said part of the printed information comprises a barcode.

4. Method according to claim 1, **characterized in that** part of the printed information is visible through the package material.

5. Method according to one of the preceding claims, **characterized in that** in a succeeding checking step at least part of the printed information which is visible from the outside is scanned by a suitable scanner, that at least part of the personal data is read from the memory through a suitable wireless function reading unit and that both kinds of data are compared in comparison means with the information stored in said file.
